(19) Europäisches Patentamt
European Patent Office
Office européen des brevets

(11) **EP 1 754 755 B1**

(12) **EUROPÄISCHE PATENTSCHRIFT**

(45) Veröffentlichungstag und Bekanntmachung des Hinweises auf die Patenterteilung:
**22.01.2020 Patentblatt 2020/04**

(51) Int Cl.:
**C09C 1/24** (2006.01)     **C09C 1/34** (2006.01)
**C09C 1/36** (2006.01)     C04B 28/02 (2006.01)

(21) Anmeldenummer: **06014867.3**

(22) Anmeldetag: **18.07.2006**

(54) **Pigment-Hilfsmittel-Kombination mit verbesserten Farbeigenschaften**

Pigment-aid-combination with enhanced colour properties

Combination de Pigments et d'Adjuvants à propriétés de couleur améliorées

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.07.2005 DE 102005035708**

(43) Veröffentlichungstag der Anmeldung:
**21.02.2007 Patentblatt 2007/08**

(73) Patentinhaber: **LANXESS Deutschland GmbH 50569 Köln (DE)**

(72) Erfinder:
• **Friedrich, Holger, Dr.
47798 Krefeld (DE)**
• **Kischkewitz, Jürgen, Dr.
40883 Ratingen (DE)**
• **Büchner, Gerald, Dipl.-Ing.
47839 Krefeld (DE)**

(56) Entgegenhaltungen:
**EP-A2- 0 751 189     WO-A1-03/066743**

**Beschreibung**

Die vorliegende Erfindung betrifft eine Pigment-Hilfsmittel-Kombination mit einer verbesserten Buntheit und/oder relativen Farbstärke, deren Herstellung und deren Verwendung.

Anorganische Pigmente sind in vielen Bereichen des täglichen Lebens anzutreffen. Sie werden zum Einfärben von Baustoffen wie Beton und Asphalt, Dispersionsfarben, Lacken, Kunststoffen usw. eingesetzt. Sehr häufig werden die Pigmente jedoch nach der eigentlichen Synthese noch nachträglich beschichtet. Durch eine solche Beschichtung sollen im wesentlichen die Eigenschaften der Pigmente weiter verbessert werden.

In EP 0 199 975 A1 werden Eisenoxidrotpigmente mit verbesserten koloristischen Eigenschaften beschrieben, wobei der ioselektrische Punkt der Pigmente größer als 7, besonders bevorzugt größer als 8, ist. Die gemäß dieser Lehre beschriebenen Pigmente müssen eine Beschichtung aufweisen, die aus farblosen Verbindungen einer oder mehrerer Elemente aus der Gruppe Mg, Zn, Al, La, Y, Zr, Sn, oder Ca besteht. Für die Beschichtung eignen sich schwerlösliche Verbindungen des Mg, Ca, Al und/oder Zn, die durch Aufsprühen, Aufmahlen und/oder Auffällen in wässriger Phase auf das Pigment aufgebracht werden. Das Verfahren zur Herstellung diese Eisenoxidrotpigmente ist kompliziert und erfordert die ständige Überwachung des isoelektrischen Punktes. In DE 36 32 913 A1 wird dieses Verfahren auch auf andere Eisenoxidfarbpigmente ausgedehnt. Die Nachteile des Verfahrens bleiben jedoch die gleichen.

Die EP 0 634 991 A1 beschreibt oberflächenmodifizierte Partikel sowie ein Verfahren zu deren Herstellung. Die darin offenbarten Partikel sind denen aus EP 0 199 975 A1 ähnlich. Sie unterscheiden sich nur durch eine zweite Beschichtung mit mindestens einem die Dispersion fördernden Mittel. Als solche werden beispielsweise Ligninsulfonate und Polyacrylate genannt. Die Herstellung derartiger Partikel ist immer ein mehrstufiger Prozeß und deshalb umfangreich.

US 6,758,893 B2 beschreibt ein Verfahren zu Herstellung von Extrusionsgranulaten. Im einzigen offenbarten Beispiel, werden Eisenoxidgelbgranulate zum Einfärben eines zementären Systems eingesetzt. Obwohl es die Aufgabe der Erfindung war, rasch dispergierbare Granulate herzustellen, ist ein mit Eisenoxidgelbgranulat eingefärbter Zement zwar gelber, aber auch wesentlich farbschwächer. Aus den veröffentlichen $\Delta L^*$-Werten kann darauf geschlossen werden, dass die Extrusionsgranulate um circa 10% bis 15% farbschwächer sind als das eingesetzte Eisenoxidgelb-Ausgangspulver. Das offenbarte Extrusionsverfahren liefert also nur farbschwache Granulate.

EP0751189A2 offenbart pulverförmige Pigmentzubereitungen, enthaltend nebem einem Pigment hohe Anteile organischer Hilfsmittel wie Novolake und Polyvinylalkohole.

Aus der WO03/066743 sind Pigmentzubereitungen bekannt, die hohe Anteile an nicht-ionischen oberflächenaktiven Additive und anionischen oberflächenaktiven Additive als Hilfsmittel enthalten.

Die US 5,853,476 A1 beziehungsweise EP 1 027 302 B1 beschreibt ein Verfahren zur Einfärbung eines zementartigen Systems mit kompaktierten anorganischen Pigmentgranulaten, wobei der färbende Effekt der kompaktierten anorganischen Granulate in dem zementartigen System den Pulverstandard übersteigt. Obwohl in zwei Beispielen die Farbmessung in dem zementären System beschrieben ist, womit der färbende Effekt der anorganischen kompaktierten Pigmentgranulate und des Pulverstandards mit Hilfe eines Farbmessgerätes erfasst werden, werden keinerlei Daten zu den Farbwerten und Farbstärken offenbart. In den beiden offenbarten Beispielen werden lediglich visuelle Abmusterungen der hergestellten Prüfkörper beschrieben, Die mit den anorganischen kompaktierten Pigmentgranulaten eingefärbten Prüfkörper werden gegenüber dem Pulverstandard im Falle eines kompaktierten Eisenoxidrotgranulates als "röter und heller" beziehungsweise im Falle eines kompaktierten Eisenoxidgelbgranulates als "gelber und heller" beschrieben. Diese Pigmentgranulate sind nach eigenen Angaben farbschwächer als das Ausgangspulver ("heller"). Nachteilig bei dem beschriebenen Herstellungsverfahren für die anorganischen kompaktierten Pigmentgranulate ist außerdem der relativ hohe Anteil eines dispergierenden Mittels von über 3 Gew-% bezogen auf Pigment, welches gleichzeitig als Bindemittel wirkt. Als dispergierendes Mittel wird bevorzugt Ligninsulfonat eingesetzt. Dieses wirkt in Betonmischungen jedoch als Verflüssiger, beeinflusst das Wasser-Zement-Verhältnis und wirkt sich auf die Betonkonsistenz aus.

Aufgabe der vorliegendenen Erfindung war es daher, eine Pigment-Hilfsmittel-Kombination bereit zu stellen, die im Anwendungsmedium eine verbesserte Buntheit und/oder relative Farbstärke aufweist, und durch ein einfaches Verfahren in einem Schritt unter Verwendung von handelsüblichen organischen Hilfsmitteln hergestellt werden kann.

Diese Aufgabe wurde gelöst durch eine Pigment-Hilfsmittel-Kombination, enthaltend ein oder mehrere anorganische Buntpigmente, ausgewählt aus der Gruppe Eisenoxid- oder Chromoxidpigmente, oder Mischungen davon und ein oder mehrere organische Hilfsmittel, ausgewählt aus der Gruppe der modifizierten Polycaboxylate wie organische Hilfsmittel Produkte aus der neomere® TINT-Serie der Firma Chryso, teil- oder vollhydrolysierte Polyvinylalkohole, Alkylsulfate, -sulfonate, -phosphate und - phosphonate jeweils in Form ihrer Alkalimetalsalze, oder Mischungen davon, woebei die Hilfsmittel-Kombination

- eine Buntheit $\Delta C_{ab}^*$, gemessen in CIELAB-Einheiten gemäß DIN 5033 und DIN 6174 von $\geq 1{,}5$, insbesondere $\geq 1{,}8$ und/oder

- eine relative Farbstärke von $\geq 108$ %, insbesondere $\geq 110$ %

bezogen auf das eingesetzte Pigment ohne das/die verwendete(n) Hilfsmittel, aufweisen gemäß dem Baustoff-Farbtest aufweist und die organischen Hilfsmittel in einer Menge von 0,01 Gew.-% bis 5 Gew.-%, bevorzugt von 0,1 Gew.- % bis 5 Gew.-%, gerechnet jeweils als Wirkstoff, bezogen auf das/die anorganische(n) Pigment(e), zugesetzt werden.

Die Methoden zur Messung der Farbwerte, zur Berechnung der Buntheit $\Delta C_{ab}^*$ sowie der relativen Farbstärke sind in den Beispielen angegeben.

Die Pigment-Hilfsmittel-Kombination weist vorzugsweise eine Buntheit $\Delta C_{ab}^*$, gemessen in CIELAB-Einheiten gemäß DIN 5033 und DIN 6174 von > 1,5, insbesondere > 1,8 und eine relative Farbstärke von > 95 % bezogen auf das eingesetzte Pigment ohne das/die verwendete(n) Hilfsmittel, gemäß dem Baustoff-Farbtest auf.

. Da die organischen Hilfsmittel oftmals nicht als Feststoff, sondern in Form von Lösungen, Suspensionen oder Emulsionen eingesetzt werden, verstehen sich die obigen Angaben auf den Wirkstoff bezogen.

Die Pigment-Hilfsmittel-Kombination weist vorzugsweise einen Restwassergehalt von unter 4 Gew.-%, bevorzugt unter 2 Gew.-% auf. Dieser kann gegebenenfalls durch eine Nachtrocknung erreicht werden. Die Methode zur Bestimmung des Restwassergehaltes ist in den Beispielen angegeben.

Die Pigment-Hilfsmittel-Kombination liegt in Granulatform vor. Unter "Granulat" wird im Kontext der Erfindung jedes Material verstanden, dessen mittlere Korngröße im Vergleich mit den Ausgangsmaterialien durch einen Behandlungsschritt vergrößert worden ist. "Granulat" umfasst daher nicht nur Sprühgranulate und Kompaktierungsgranulate, sondern auch zum Beispiel Produkte eines Nass- oder Feuchtbehandlung mit anschließender Zerkleinerung, und Produkte trockener oder im wesentlichen trockener Verarbeitungsschritte, zum Beispiel trocken hergestellte Granulate, Briketts und dergleichen.

Die Pigment-Hilfsmittel-Kombination liegt vorzugsweise als Perlgranulat vor. Perlgranulate können beispielsweise durch Sprühgranulation (Sprühtrocknung über Scheibe oder Düse) in Gleich- oder Gegenstromverfahren erhalten werden.

Mindestens 85 % der granulierten Pigment-Hilfsmittel-Kombination weist vorzugsweise eine Teilchengröße zwischen 60 $\mu$m und 3000 $\mu$m, bevorzugt zwischen 80 $\mu$m und 1500 $\mu$m auf.

Die Erfindung umfasst auch ein Verfahren zur Herstellung einer Pigment-Hilfsmittel-Kombination, dadurch gekennzeichnet, dass in bekannter Weise hergestellte anorganische Pigmente mit mindestens einem organischen Hilfsmittel gemischt werden und die Mischung gegebenenfalls getrocknet und/oder gemahlen wird.

Ein Vorteil des erfindungsgemäßen Herstellungsverfahren ist, dass das Auffüllen einer Nachbehandlungssubstanz oder gar ein mehrstufiges Syntheseverfahren für die Nachbehandlung bei der Herstellung der erfindungsgemäßen Pigment-Hilfmittel-Kombination nicht erforderlich ist.

Die Herstellung der erfindungsgemäßen Pigment-Hilfsmittel-Kombination kann entweder ausgehend vom trockenem Pigment oder auch in der Nassphase (Suspension oder Paste) erfolgen.

Im ersten Fall wird das in bekannter Weise hergestellte Pigment mit mindestens einem organischen Hilfsmittel gemischt und die Mischung gegebenenfalls gemahlen. Für das Vermischen von Pigment und Hilfsmittel können sämtliche, dem Fachmann bekannte Mischer eingesetzt werden. Je nach verwendetem Mischaggregat kann es bei dieser Vorgehensweise unter Umständen noch günstig sein, eine Mühle nachzuschalten, um eine vollständige und homogene Pigment-Hilfsmittel-Kombination zu erhalten.

Die in bekannter Weise hergestellten anorganischen Pigmente in Suspension oder Paste werden vorzugsweise mit mindestens einem organischen Hilfsmittel gemischt, getrocknet und gegebenenfalls gemahlen. Im Falle der Herstellung über die Nassphase (Suspension oder Paste) kann das oder die Hilfsmittel nach der eigentlichen Pigmentsynthese bei prinzipiell jedem Verfahrensschritt der Auf- und Weiterverarbeitung des Pigmentes bis zur fertigen Konfektionierung zugesetzt werden, beispielsweise nach der Filtration und Waschung des Pigmentes und vor dessen Trocknung.

Die Pigmentsuspension oder Paste ist vorzugsweise eine Suspension aus dem Pigmentherstellungsprozess. Der Zusatz des Hilfsmittels in der Nassphase ist besonders bevorzugt, da in der Suspension die Zugabe und das Untermischen des bzw. der Hilfsmittel(s) problemlos möglich ist.

Die Pigmentsuspension ist vorzugsweise eine erneute Dispersion von agglomerierten Partikeln. Durch das erneute Dispergieren von bereits agglomerierten Partikeln, kann ausgehend von Pigmentpulver gezielt eine Pigmentsuspension für die Umsetzung mit dem oder den organischen Hilfsmitteln hergestellt werden. Anschließend erfolgt eine Trocknung. Für den Trocknungsschritt steht dem Fachmann eine Reihe von Aggregaten zur Verfügung. Es seien an dieser Stelle nur Kanal-, Band-, Etagen-, Walzen-, Trommel-, Röhren-, Schaufeltrockner, oder auch diskontinuierlich arbeitende Kammer-Horden-Trockner erwähnt. Die Trocknung erfolgt vorzugsweise durch Sprühtrocknung oder Wirbelschichttrocknung. Vorzugsweise werden Sprühtrockner (Zerstäubungstrockner) eingesetzt, die mit Sprühscheiben oder -düsen im Gleich- oder Gegenstromverfahren arbeiten.

Je nach gewähltem Trocknungsaggregat kann es erforderlich sein, dass sich noch ein Mahlschritt anschließt. Vor oder nach der Mahlung kann noch ein zusätzlicher Temperungsschritt durchgeführt werden.

Nach dem Stand der Technik kommen als Herstellungsverfahren für Pigmentgranulate Sprühgranulation (Sprühtrocknung über Scheibe oder Düse) im Gleich- oder Gegenstromverfahren, Aufbaugranulation (Mischer, Wirbelschichtgranulator, Teller bzw. Trommel), Kompaktier- oder Extrusionsverfahren in Frage. Natürlich sind auch Kombinationen aus diesen Granulationsverfahren denkbar. Die Wahl des geeigneten Granulationsverfahrens hängt unter anderem davon ab, ob das Hilfsmittel bereits in der Nassphase (Suspension oder Paste) zugesetzt wurde oder zum bereits getrockneten Pigment. Im ersten Fall bieten sich die Sprühtrocknungs- oder Extrusionsverfahren an, im zweiten Fall das Kompaktierverfahren. Die Pigment-Hilfsmittel-Kombination wird vorzugsweise in trockenem und gegebenenfalls gemahlenem Zustand anschließend noch einem Granulationsprozess unterworfen.

Die Erfindung umfasst auch die Verwendung der Pigment-Hilfsmittel-Kombination zur Einfärbung von kalk- und/oder zementgebundenen Baustoffen, wie zum Beispiel Beton, Zementmörtel, Putz, Kalksandstein oder auch zum Einfärben von Asphalt. Prinzipiell ist die erfindungsgemäß hergestellte Pigment-Hilfsmittel-Kombination aber auch zum Einfärben von Lacken, Dispersionsfarben und Kunststoffen geeignet.

Die Pigment-Hilfsmittel-Kombination wird vorzugsweise mit den Baustoffen in einer Menge von 0,1 bis 10 Gew.-%, bezogen auf Zement, oder bei Asphalt bezogen auf das gesamte Mischgut, vermischt.

Die Pigment-Hilfsmittel-Kombination wird vorzugsweise erst in Wasser suspendiert und anschließend mit den Baustoffen vermischt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

Anhand der nachfolgenden Beispiele wird die Erfindung näher erläutet, ohne dass dadurch eine Einschränkung der Erfindung bewirkt werden soll. Die gemachten Mengenangaben in Gew.-% beziehen sich jeweils auf das eingesetzte Pigment.

## Beispiele

### I. Beschreibung der verwendeten Messmethoden

### I.1 Baustoff-Farbtest

Die Prüfung der Farbwerte in Baustoffen erfolgte in Zementmörtel über die farbmetrische Messung von mit Weißzement hergestellten Prismen bei folgenden Daten (in Anlehnung an DIN EN 12878: 2005, "Pigmente zum Einfärben von kalk- und/oder zementgebunden Baustoffen", Kap. 5.12):
Zement-Quarzsand-Verhältnis 1:4, Wasser-Zement-Wert 0,35, Pigmentierungshöhe 1,2 %, bezogen auf Zement, verwendeter Mischer von RK Toni Technik, Berlin, mit 5 1-Mischschüssel, Bauform 1551, Drehzahl 140 U/min, Ansatz: 1200 g Quarzsand 0,1 bis 1 mm, 600 g Quarzsand 1 bis 2 mm, 200 g Kalksteinmehl (< 5 % Siebrückstand auf 90 $\mu$m-Sieb), 500 g Weißzement. Die Quarzsandfraktionen und das Kalksteinmehl werden zusammen im Mischbehälter vorgelegt. Anschließend wird das Pigment zugegeben und 10 s vorgemischt (Mischer Stufe 1: langsam). Zu dieser Mischung wird nun das Wasser gegeben, wobei darauf zu achten ist, dass es in die Mitte der Mischung eingebracht wird. Nach dem Versickern wird der Zement zugesetzt und gemischt (Mischer Stufe 1: langsam). Nach 100 s beziehungsweise 200 s Mischzeit wird eine Probe (600 g) entnommen und daraus ein Probekörper (10 x 10 x 2,5 cm) unter Druck hergestellt (Presskraft 114 kN für 2 Sekunden). Härtung der Probekörper zum fertigen Stein: 24 Stunden bei 30°C und 95 % relative Luftfeuchte mit anschließendem Trocknen von 4 Stunden bei 60°C. Farbdatenmessung über Dataflash 2000 Datacolor International, 4 Messpunkte je Stein (Messgeometrie d/8°, Lichtart C/2° mit Glanzeinschluss). Die erhaltenen Mittelwerte werden verglichen mit den Werten einer Referenzprobe. Beurteilt werden der Buntheitsabstand $\Delta C_{ab}^*$ und die relative Farbstärke (Referenzprobe = 100 %) (DIN 5033, DIN 6174).

Im Sinne dieser Anmeldung werden die folgenden farbmetrischen Abkürzungen und Berechnungen verwendet, wie sie aus dem CIELAB-System bekannt sind:

- a* entspricht der Rot-Grün-Achse mit $\Delta a^* = a^*$ (Probe) - a* (Bezug)

- b* entspricht der Gelb-Blau-Achse mit $\Delta b^* = b^*$ (Probe) - b* (Bezug)

- $C_{ab}^*$ entspricht der Buntheit, wobei $(C_{ab}^*)^2 = (a^*)^2 + (b^*)^2$

- $\Delta C_{ab}^*$ entspricht dem Buntheitsabstand mit $\Delta C_{ab}^* = C_{ab}^*$ (Probe) - $C_{ab}^*$ (Bezug)

- L* entspricht der Helligkeit mit $\Delta L^* = L^*$ (Probe) - L* (Bezug).

### I.2 Relative Farbstärke

Für die relative Farbstärke in % gelten folgende Gleichungen:

$$\text{Relative Farbstärke in } \% = \frac{(K/S)_{Probe}}{(K/S)_{Bezug}} \cdot 100$$

$$K/S = \frac{(1 - \beta^*)^2}{2 \cdot \beta^*}$$

$$\beta^* = \frac{Y/100 - r_0}{1 - r_0 - r_2 \cdot (1 - Y/100)},$$

wobei $r_0$ = 0,04 und $r_2$ = 0,6 und Y der Normfarbwert (Helligkeit) ist.

Die Berechnung erfolgt in Anlehnung an DIN 53 234.

### I.3 Schüttgewicht

Das Schüttgewicht wurde am Fertiggut ohne weitere Behandlung des Produktes durch das Verhältnis aus Masse und Volumen bestimmt.

### I.4 Restfeuchte

Die Restfeuchte wurde durch schonende Trocknung der Pigment-Hilfsmittel-Kombination bis zur Gewichtskonstanz bestimmt.

### I.5 Druckfestigkeit

Die Druckfestigkeit wurde in Anlehnung an DIN EN 196-1 bestimmt. Geprüft wird dabei die Druckfestigkeit von pigmentiertem Zementmörtel im Vergleich zur einer unpigmentierten Probe, wobei die Abweichungen nicht größer sein dürfen als in der EN 12878 "Pigmente zum Einfärben von kalk- und/oder zementgebundenen Baustoffen" vorgegeben (maximal -8 % für bewehrten Beton).

### I.6 Erstarrungsverhalten

Das Erstarrungsverhaltens wurde in Anlehnung an DIN EN 196-3 bestimmt. Dabei wird der Erstarrungsbeginn und das Erstarrungsende eines Zementleims mit und ohne Pigmentierung miteinander verglichen, wobei die Abweichungen nicht größer sein dürfen als in der EN 12878 vorgegeben.

### II. Beispiel 1

10 kg Eisenoxidrot Bayferrox® 110 (Handelsprodukt der Lanxess Deutschland GmbH) wurde mit 2,5 Gew.-% neomere® TINT 317 (Handelsprodukt der Chryso, SAS) in einem Mischer intensiv gemischt und anschließend über eine Bauermeistermühle mit 3 mm Siebeinsatz homogenisiert.

Das erhaltene Produkt besaß eine Restfeuchte von 0,7 Gew.-% sowie ein Schüttgewicht von 0,40 g/cm$^3$ und wurde wie oben beschrieben gemäß dem Baustoff-Farbtest mit 100 s Mischzeit eingearbeitet. Der hergestellte Stein war homogen eingefärbt und ergab bei der Farbmessung $\Delta$a*=1,0, $\Delta$b* = 1,4 - entsprechend einem Buntheitsabstand $\Delta C_{ab}^*$ = 1,7 - und eine relative Farbstärke von 111 %. Als Bezug diente der ebenfalls homogen eingefärbte Stein aus demBayferrox® 110-Ausgangsmaterial, welches ebenfalls über die Bauermeistermühle mit 3 mm-Siebeinsatz gemahlen. Die nachbehandelte Probe ist also wesentlich farbstärker und wesentlich gesättigter als das Ausgangsmaterial.

### III. Beispiel 2

10 kg Eisenoxidrot Bayferrox® 110 wurde mit 2,0 Gew.-% Texapon® 842 (Handelsprodukt der Cognis Deutschland GmbH) in einem Mischer intensiv gemischt und anschließend über eine Bauermeistermühle mit 3 mm Siebeinsatz homogenisiert.

Das erhaltene Produkt besaß eine Restfeuchte von 0,5 Gew.-% sowie ein Schüttgewicht von 0,38 g/cm³ und wurde wie oben beschrieben gemäß dem Baustoff-Farbtest mit 100 s Mischzeit eingearbeitet. Der hergestellte Stein war homogen eingefärbt und ergab bei der Farbmessung $\Delta a^* = 1,0$, $\Delta b^* = 1,4$ - entsprechend einem Buntheitsabstand $\Delta C_{ab}^* = 1,6$ - und eine relative Farbstärke von 108 %. Als Bezug diente der ebenfalls homogen eingefärbte Stein aus dem Bayferrox® 110-Ausgangsmaterial, welches ebenfalls über die Bauermeistermühle mit 3 mm-Siebeinsatz gemahlen. Die nachbehandelte Probe ist also wesentlich farbstärker und wesentlich gesättigter als das Ausgangsmaterial.

## IV. Beispiel 3

25 kg einer Braunmischung aus Eisenoxidrot und -schwarz wurde mit 25 kg Wasser und unter Zusatz von 2,5 Gew.-% neomere® TINT 317 angemaischt. Die Suspension wies einen Feststoffgehalt von 48,1 % und einen pH-Wert von 5,1 auf und wurde auf einem Düsensprühtrockner getrocknet. Das erhaltene Granulat ist rieselfähig und besaß eine Restfeuchte von 0,5 Gew.-% sowie ein Schüttgewicht von 1,08 g/cm³. Untersuchungen zur Druckfestigkeit in Anlehnung an DIN EN 196-1 und des Erstarrungsverhaltens in Anlehnung an DIN EN 196-3 zeigen, dass die Anforderungen der Norm EN 12878 auch für bewehrten Beton erfüllt sind.

Das Granulat wurde wie oben beschrieben gemäß dem Baustoff-Farbtest mit 200 s Mischzeit eingearbeitet. Der hergestellte Stein war homogen eingefärbt und ergab bei der Farbmessung $\Delta a^* = 0,8$, $\Delta b^* = 1,4$ - entsprechend einem Buntheitsabstand $\Delta C_{ab}^* = 1,6$ - und eine relative Farbstärke von 110%. Als Bezug diente der ebenfalls homogen eingefärbte Stein aus der Braunmischung ohne Zusatz eines Hilfsmittels. Das mit Hilfsmittel versetzte Granulat ist also wesentlich farbstärker und wesentlich gesättigter als das Ausgangsmaterial. Ein derart großer Buntheitsabstand und relativer Farbstärkeunterschied zwischen den beiden Steinen ist visuell wahrnehmbar.

## V. Beispiel 4

25 kg Eisenoxidgelb Bayferrox® 920 (Handelsprodukt der Lanxess Deutschland GmbH) wurden in 37,5 kg Wasser und 1,5 Gew.-% einer 40 %igen wässrigen Lösung eines Natrium-Polyacrylates und mit 0,5 Gew.- eines teilhydrolysierten Polyvinylalkohols mit niedrigem Molekulargewicht suspendiert. Die Suspension wies einen Feststoffgehalt von 38,3 % und einen pH-Wert von 6,4 auf und wurde auf einem Düsensprühtrockner getrocknet. Das erhaltene Granulat ist rieselfähig und besaß eine Restfeuchte von 0,7 Gew.-% sowie ein Schüttgewicht von 0,48 g/cm³. Untersuchungen zur Druckfestigkeit in Anlehnung an DIN EN 196-1 und des Erstarrungsverhaltens in Anlehnung an DIN EN 196-3 zeigen, das die Anforderungen der Norm EN 12878 auch für bewehrten Beton erfüllt sind.

Das Granulat wurde wie oben beschrieben gemäß dem Baustoff-Farbtest mit 200 s Mischzeit eingearbeitet. Der hergestellte Stein war homogen eingefärbt und ergab bei der Farbmessung $\Delta a^* = 0,0$, $\Delta b^* = 2,3$ - entsprechend einem Buntheitsabstand $\Delta C_{ab}^* = 2,2$ - und eine relative Farbstärke von 102 %. Als Bezug diente der ebenfalls homogen eingefärbte Stein aus dem eingesetzten Bayferrox® 920-Pulver ohne Zusätze. Das mit Hilfsmittel versetzte Granulat ist also wesentlich bunter als das Ausgangsmaterial. Ein derart großer Buntheitsabstand zwischen den beiden Steinen ist visuell klar wahrnehmbar.

## VI. Beispiel 5

25 kg Eisenoxidgelb Bayferrox® 920 wurden in 37,5 kg Wasser und 1,5 Gew.-% einer 40 %igen wässrigen Lösung des Natriumsalzes der Polyasparaginsäure und mit 1,0 Gew.-% eines teilhydrolysierten Polyvinylalkohols mit höherem Molekulargewicht suspendiert. Die Suspension wies einen Feststoffgehalt von 38,6 % und einen pH-Wert von 5,9 auf und wurde auf einem Düsensprühtrockner getrocknet. Das erhaltene Granulat ist rieselfähig und besaß eine Restfeuchte von 0,7 Gew.-% sowie ein Schüttgewicht von 0,49 g/cm³. Untersuchungen zur Druckfestigkeit in Anlehnung an DIN EN 196-1 und des Erstarrungsverhaltens in Anlehnung an DIN EN 196-3 zeigen, dass die Anforderungen der Norm EN 12878 auch für bewehrten Beton erfüllt sind.

Das Granulat wurde wie oben beschrieben gemäß dem Baustoff-Farbtest mit 200 s Mischzeit eingearbeitet. Der hergestellte Stein war homogen eingefärbt und ergab bei der Farbmessung $\Delta a^* = 0,3$, $\Delta b^* = 3,8$ - entsprechend einem Buntheitsabstand $\Delta C_{ab}^* = 3,8$ - und eine relative Farbstärke von 110%. Als Bezug diente der ebenfalls homogen eingefärbte Stein aus dem eingesetzten Bayferrox® 920-Pulver ohne Zusätze. Das mit Hilfsmittel versetzte Granulat ist also wesentlich bunter und farbstärker als das Ausgangsmaterial. Ein derart großer Buntheitsabstand und relativer Farbstärkeunterschied zwischen den beiden Steinen ist visuell klar wahrnehmbar.

## VII. Beispiel 6 (Vergleichsbeispiel)

25 kg Eisenoxidgelb Bayferrox® 920 wurden in 37,5 kg Wasser und 1,5 Gew.-% einer 40 %igen wässrigen Lösung des Natriumsalzes der Polyasparaginsäure suspendiert. Die Suspension wies einen Feststoffgehalt von 38,3 % und einen pH-Wert von 6,3 auf und wurde auf einem Düsensprühtrockner getrocknet. Das erhaltene Granulat ist rieselfähig und besaß eine Restfeuchte von 0,7 Gew.- % sowie ein Schüttgewicht von 0,54 g/cm$^3$. Untersuchungen zur Druckfestigkeit in Anlehnung an DIN EN 196-1 und des Erstarrungsverhaltens in Anlehnung an DIN EN 196-3 zeigen, dass die Anforderungen der Norm EN 12878 auch für bewehrten Beton erfüllt sind.

Das Granulat wurde wie oben beschrieben gemäß dem Baustoff-Farbtest mit 200 s Mischzeit eingearbeitet. Der hergestellte Stein war homogen eingefärbt und ergab bei der Farbmessung $\Delta a^* = 0{,}2$, $\Delta b^* = 0{,}9$ - entsprechend einem Buntheitsabstand $\Delta C_{ab}^* = 0{,}9$ - und eine relative Farbstärke von 102 %. Als Bezug diente der ebenfalls homogen eingefärbte Stein aus dem eingesetzten Bayferrox® 920-Pulver ohne Zusatz. Das Granulat ist also koloristisch mit dem Ausgangsmaterial vergleichbar.

## VII. Beispiel 7

6 kg Eisenoxidgelb-/Eisenoxidrot-Mischung Bayferrox® 960 (Handelsprodukt der Lanxess Deutschland GmbH) wurde mit 1,5 Gew.- % neomere® TINT 305 (Handelsprodukt der Chryso, SAS) und mit 1,5 Gew.- % einer 20 %igen wässrigen Lösung eines teilhydrolysierten Polyvinylalkohols mit höherem Molekulargewicht in einem Mischer intensiv gemischt und anschließend über eine Bauermeistermühle mit 3 mm Siebeinsatz homogenisiert.

Das erhaltene Produkt besaß eine Restfeuchte von 0,9 Gew.- % sowie ein Schüttgewicht von 0,26 g/cm$^3$ und wurde wie oben beschrieben gemäß dem Baustoff-Farbtest mit 100 s Mischzeit eingearbeitet. Der hergestellte Stein war homogen eingefärbt und ergab bei der Farbmessung $\Delta a^* = 0{,}5$, $\Delta b^* = 1{,}4$ - entsprechend einem Buntheitsabstand $\Delta C_{ab}^* = 1{,}5$ - und eine relative Farbstärke von 108 %. Als Bezug diente der ebenfalls homogen eingefärbte Stein aus dem Bayferrox® 960-Ausgangsmaterial, welches ebenfalls über die Bauermeistermühle mit 3 mm-Siebeinsatz gemahlen. Die nachbehandelte Probe ist also wesentlich farbstärker und wesentlich gesättigter als das Ausgangsmaterial.

## VII. Beispiel 8

25 kg Eisenoxidrot Bayferrox® 110 wurde mit 1,5 Gew.- % neomere® TINT 317 und mit 2,0 Gew.- % einer 25 %igen wässrigen Lösung eines teilhydrolysierten Polyvinylalkohols mit niedrigem Molekulargewicht in einem Mischer intensiv gemischt. Die Mischung wurde über einen Kompaktierer 200/50P (Fa. Bepex, Leingarten) mit ca. 10 kN (2 kN/cm) und anschließend auf einem Schroter (Fa. Frewitt, Fribourg, Schweiz) mit einem Sieb von 1,25 mm Maschenweite zerkleinert. Das zerkleinerte Produkt wurde über eine Allgaier-Siebmaschine mit 250 μm Maschenweite abgesiebt. Der Anteil des granulierten Überkorns betrug ca. 82 %.

Das erhaltene Überkorn ist rieselfähig und besaß eine Restfeuchte von 1,0 Gew.-% sowie ein Schüttgewicht von 0,98 g/cm$^3$. Untersuchungen zur Druckfestigkeit in Anlehnung an DIN EN 196-1 und des Erstarrungsverhaltens in Anlehnung an DIN EN 196-3 zeigen, dass die Anforderungen der Norm EN 12878 auch für bewehrten Beton erfüllt sind. Das Überkorn wurde wie oben beschrieben gemäß dem Baustoff-Farbtest mit 100 s Mischzeit eingearbeitet. Der hergestellte Stein war homogen eingefärbt und ergab bei der Farbmessung $\Delta a^* = 0{,}7$, $\Delta b^* = 1{,}8$ - entsprechend einem Buntheitsabstand $\Delta C_{ab}^* = 1{,}7$ - und eine relative Farbstärke von 103 %. Als Bezug diente der ebenfalls homogen eingefärbte Stein aus dem Bayferrox® 110-Ausgangsmaterial. Das granulierte Überkorn ist also wesentlich gesättigter als das Ausgangsmaterial.

## VIII. Beispiel 9

20 kg Chromoxid Chromoxidgrün GN (Handelsprodukt der Lanxess Deutschland GmbH) wurde in 24,5 kg Wasser und mit 2,0 Gew.-% neomere® TINT 317 und mit 0,5 Gew.-% eines teilhydrolysierten Polyvinylalkohols mit niedrigem Molekulargewicht suspendiert. Die Suspension wies einen Feststoffgehalt von 46,0 % und einem pH-Wert von 6,7 auf und wurde auf einem Düsensprühtrockner getrocknet. Das erhaltene Granulat ist rieselfähig und besaß eine Restfeuchte von 0,5 Gew.- % sowie ein Schüttgewicht von 1,52 g/cm$^3$.

Das Granulat wurde wie oben beschrieben gemäß dem Baustoff-Farbtest mit 100 s beziehunsweise 200 s Mischzeit eingearbeitet. Die hergestellten Steine waren homogen eingefärbt und ergaben bei 100 s Mischzeit in der Farbmessung $\Delta a^* = -0{,}9$, $\Delta b^* = 1{,}4$ - entsprechend einem Buntheitsabstand $\Delta C_{ab}^* = 1{,}7$ - und eine relative Farbstärke von 109 % beziehungsweise bei 200 s Mischzeit in der Farbmessung $\Delta a^* = -1{,}3$, $\Delta b^* = 1{,}6$ - entsprechend einem Buntheitsabstand $\Delta C_{ab}^* = 2{,}1$ - und eine relative Farbstärke von 114 %. Als Bezug diente jeweils der ebenfalls homogen eingefärbte Stein aus dem eingesetzten Chromoxidgrün GN-Pulver ohne Zusätze bei 100 s beziehungsweise 200 s Mischzeit. Das mit Hilfsmittel versetzte Granulat ist also wesentlich bunter und farbstärker als das Ausgangsmaterial. Ein derart großer Buntheitsabstand und relativer Farbstärkeunterschied zwischen den beiden Steinen bei 100 s Mischzeit und zwischen den beiden Steinen bei 200 s Mischzeit ist visuell klar wahrnehmbar.

### IX. Beispiel 10 (Vergleichsbeispiel)

20 kg Chromoxid Chromoxidgrün GN wurde in 24,5 kg Wasser und 2,0 Gew.-% einer 40 %igen wässrigen Lösung von Natrium-Polyacrylat suspendiert. Die Suspension wies einen Feststoffgehalt von 46,0 % und einen pH-Wert von 8,3 auf und wurde auf einem Düsensprühtrockner getrocknet. Das erhaltene Granulat ist rieselfähig und besaß eine Restfeuchte von 0,5 Gew.-% sowie ein Schüttgewicht von 1,48 g/cm$^3$.

Das Granulat wurde wie oben beschrieben gemäß dem Baustoff-Farbtest mit 100 s beziehungsweise 200 s Mischzeit eingearbeitet. Die hergestellten Steine waren homogen eingefärbt und ergaben bei 100 s Mischzeit in der Farbmessung $\Delta a^*$ = + 0,0, $\Delta b^*$ = 0,2 - entsprechend einem Buntheitsabstand $\Delta C_{ab}^*$ = 0,2 - und eine relative Farbstärke von 103 % beziehungsweise bei 200 s Mischzeit in der Farbmessung $\Delta a^*$ = 0,1, $\Delta b^*$ = 0,3 - entsprechend einem Buntheitsabstand $\Delta C_{ab}^*$ = 0,3 - und eine relative Farbstärke von 105 %. Als Bezug diente jeweils der ebenfalls homogen eingefärbte Stein aus dem eingesetzten Chromoxidgrün GN-Pulver ohne Zusätze bei 100 s beziehungsweise 200 s Mischzeit. Das Granulat ist also koloristisch mit dem Ausgangsmaterial vergleichbar.

Alle Ergebnisse sind in Tabelle 1 zusammengefasst.

Tabelle 1

| Beispiel | 1[1] | 2[1] | 3[2] | 4[2] | 5[2] | VB 6[2] | 7[1] | 8[1] | 9[1/2] | VB 10[1/2] |
|---|---|---|---|---|---|---|---|---|---|---|
| $\Delta a^*$ | 1,0 | 1,0 | 0,8 | 0,0 | 0,3 | 0,2 | 0,5 | 0,7 | -0,9/-1,3 | 0,0/0,1 |
| $\Delta b^*$ | 1,4 | 1,4 | 1,4 | 2,3 | 3,8 | 0,9 | 1,4 | 1,8 | 1,4/1,6 | 0,2/0,3 |
| $\Delta L^*$ | -1,1 | -0,9 | -1,0 | -0,3 | -0,9 | -0,2 | -0,9 | -0,4 | -1,0/-1,4 | -0,3/-0,5 |
| $\Delta C_{ab}^*$ | 1,7 | 1,6 | 1,6 | 2,2 | 3,8 | 0,9 | 1,5 | 1,7 | 1,7/2,1 | 0,2/0,3 |
| Relative Farbstärke (%) | 111 | 108 | 110 | 102 | 110 | 102 | 108 | 103 | 109/114 | 103/105 |
| Schüttgewicht (g/cm$^3$) | 0,4 | 0,38 | 1,08 | 0,48 | 0,49 | 0,54 | 0,26 | 0,98 | 1,52 | 1,48 |
| Restfeuchte (Gew.- %) | 0,7 | 0,5 | 0,5 | 0,7 | 0,7 | 0,7 | 0,9 | 1,0 | 0,5 | 0,5 |
| Druckfestigkeit | Nicht geprüft | Nicht geprüft | Erfüllt | Erfüllt | Erfüllt | Erfüllt | Nicht geprüft | Erfüllt | Nicht geprüft | Nicht geprüft |
| Erstarrungsverhalten | Nicht geprüft | Nicht geprüft | Erfüllt | Erfüllt | Erfüllt | Erfüllt | Nicht geprüft | Erfüllt | Nicht geprüft | Nicht geprüft |
| pH-Wert (Suspension) | --- | --- | 5,1 | 6,4 | 5,9 | 6,3 | --- | --- | 6,7 | 8,3 |

[1] bei 100 s Mischzeit
[2] bei 200 s Mischzeit

EP 1 754 755 B1

**Patentansprüche**

1. Pigment-Hilfsmittel-Kombination in Granulatform, enthaltend ein oder mehrere anorganische Buntpigmente ausgewählt aus der Gruppe Eisenoxid- oder Chromoxidpigmente, oder Mischungen davon, und ein oder mehrere organische Hilfsmittel, ausgewählt aus der Gruppe der modifizierten Polycarboxylate, teil- oder vollhydrolysierten Polyvinylalkohole, Alkylsulfate in Form ihrer Alkalimetallsalze, Alkylsulfonate in Form ihrer Alkalimetallsalze, Alkylphosphate in Form ihrer Alkalimetallsalze oder Alkylphosphonate in Form ihrer Alkalimetallsalze, oder Mischungen davon, wobei die Pigment-Hilfsmittel-Kombination

   • eine Buntheit $\Delta C_{ab}{}^*$, gemessen in CIELAB-Einheiten gemäß DIN 5033 und DIN 6174 von $\geq 1,5$, insbesondere $\geq 1,8$, und/oder
   • eine relative Farbstärke von $\geq 108\ \%$, insbesondere $\geq 110\ \%$, bezogen auf das eingesetzte Pigment ohne das/die verwendete(n) Hilfsmittel gemäß dem Baustoff-Farbtest aufweist,

   und die organischen Hilfsmittel in einer Menge von 0,01 Gew.-% bis 5 Gew.-%, gerechnet jeweils als Wirkstoff bezogen auf das/die anorganische(n) Pigment(e), zugesetzt werden.

2. Pigment-Hilfsmittel-Kombination gemäß Anspruch 1, **dadurch gekennzeichnet, dass** die Pigment-Hilfsmittel-Kombination eine Buntheit $\Delta C_{ab}{}^*$, gemessen in CIELAB-Einheiten gemäß DIN 5033 und DIN 6174 von $\geq 1,5$, insbesondere $\geq 1,8$, und eine relative Farbstärke von $\geq 95\ \%$ bezogen auf das eingesetzte Pigment ohne das/die verwendete(n) Hilfsmittel gemäß dem Baustoff-Farbtest aufweist.

3. Pigment-Hilfsmittel-Kombination gemäß einem oder mehreren der Ansprüche 1 bis 2, **dadurch gekennzeichnet, dass** die organischen Hilfsmittel in einer Menge von 0,1 Gew.-% bis 5 Gew.-%, gerechnet jeweils als Wirkstoff bezogen auf das/die anorganische(n) Pigment(e), zugesetzt werden.

4. Pigment-Hilfsmittel-Kombination gemäß einem oder mehreren der Ansprüche 1 bis3, **dadurch gekennzeichnet, dass** die Pigment-Hilfsmittel-Kombination weitere die Verarbeitbarkeit fördernde Hilfsmittel enthält.

5. Pigment-Hilfsmittel-Kombination gemäß einem oder mehreren der Ansprüche 1 bis 4, **dadurch gekennzeichnet, dass** die Pigment-Hilfsmittel-Kombination einen Restwassergehalt von unter 4 Gew.- %, insbesondere unter 2 Gew.- % aufweist.

6. Pigment-Hilfsmittel-Kombination gemäß einem oder mehreren der Ansprüche 1 bis 5, **dadurch gekennzeichnet, dass** die Pigment-Hilfsmittel-Kombination als Perlgranulat vorliegt.

7. Pigment-Hilfsmittel-Kombination gemäß Anspruch 6, **dadurch gekennzeichnet, dass** mindestens 85 % der granulierten Pigment-Hilfsmittel-Kombination eine Teilchengröße zwischen 60 $\mu$m und 3000 $\mu$m, insbesondere zwischen 80 $\mu$m und 1500 $\mu$m aufweist.

8. Pigment-Hilfsmittel-Kombination gemäß einem oder mehreren der Ansprüche 1 bis 7, **dadurch gekennzeichnet, dass** die Pigment-Hilfsmittel-Kombination zusätzlich Konservierungsstoffe, Entschäumer, Retentionsmittel, Rheologiemodifikatoren, Absetzverhinderer und/oder Duftstoffe enthält.

9. Verfahren zur Herstellung einer Pigment-Hilfsmittel-Kombination nach einem oder mehreren der Ansprüche 1 bis 8, **dadurch gekennzeichnet, dass** in bekannter Weise hergestellte anorganische Pigmente mit mindestens einem organischen Hilfsmittel gemischt werden und die Mischung gegebenenfalls getrocknet und/oder gemahlen wird.

10. Verfahren zur Herstellung einer Pigment-Hilfsmittel-Kombination gemäß Anspruch 9, **dadurch gekennzeichnet, dass** in bekannter Weise hergestellte anorganische Pigmente in Suspension oder Paste mit mindestens einem organischen Hilfsmittel gemischt, getrocknet und gegebenenfalls gemahlen werden.

11. Verfahren zur Herstellung einer Pigment-Hilfsmittel-Kombination gemäß Anspruch 10, **dadurch gekennzeichnet, dass** die Pigmentsuspension eine Suspension oder Paste aus dem Pigmentherstellungsprozess ist.

12. Verfahren zur Herstellung einer Pigment-Hilfsmittel-Kombination gemäß Anspruch 10, **dadurch gekennzeichnet, dass** die Pigmentsuspension eine erneute Dispersion von agglomerierten Partikeln ist.

**13.** Verfahren zur Herstellung einer Pigment-Hilfsmittel-Kombination gemäß einem oder mehreren der Ansprüche 9 bis 12, **dadurch gekennzeichnet, dass** die Trocknung durch Sprühtrocknung oder Wirbelschichttrocknung erfolgt.

**14.** Verfahren zur Herstellung einer Pigment-Hilfsmittel-Kombination gemäß Anspruch 9 oder 12, **dadurch gekennzeichnet, dass** die Pigment-Hilfsmittel-Kombination in trockenem und gegebenenfalls gemahlenem Zustand anschließend noch einem Granulationsprozess unterworfen wird.

**15.** Verwendung der Pigment-Hilfsmittel-Kombination gemäß einem oder mehreren der Ansprüche 1 bis 8 zur Einfärbung von kalk- und/oder zementgebundenen Baustoffen, wie Beton, Zementmörtel, Putz, Kalksandstein oder auch zum Einfärben von Asphalt.

**16.** Verfahren zur Einfärbung von Baustoffen mit Pigment-Hilfsmittel-Kombination gemäß Anspruch 15, **dadurch gekennzeichnet, dass** die Pigment-Hilfsmittel-Kombination mit den Baustoffen in einer Menge von 0,1 bis 10 Gew.-%, bezogen auf Zement, oder bei Asphalt bezogen auf das gesamte Mischgut, vermischt wird.

**17.** Verfahren zur Einfärbung von Baustoffen mit Pigment-Hilfsmittel-Kombination gemäß einem oder mehreren der Ansprüche 15 und 16, **dadurch gekennzeichnet, dass** die Pigment-Hilfsmittel-Kombination erst in Wasser suspendiert wird und anschließend mit den Baustoffen vermischt wird.

**Claims**

**1.** Pigment/auxiliary combination in granule form, comprising one or more inorganic chromatic pigments selected from the group of iron oxide pigments or chromium oxide pigments, or mixtures thereof, and one or more organic auxiliaries, selected from the group of modified polycarboxylates partly or fully hydrolysed polyvinyl alcohols, alkyl sulphates in the form of their alkali metal salts, alkylsulphonates in the form of their alkali metal salts, alkyl phosphates in the form of their alkali metal salts or alkylphosphonates in the form of their alkali metal salts, or mixtures thereof, wherein the pigment/auxiliary combination has

• a chroma difference $\Delta C_{ab}^{*}$, measured in CIELAB units in accordance with DIN 5033 and DIN 6174, of $\geq 1.5$, in particular $\geq 1.8$, and/or
• a relative colour strength of $\geq 108\%$, in particular $\geq 110\%$, based on the pigment employed, without the auxiliary/ies used, in accordance with the building-material colour test
and the organic auxiliaries are added in an amount of 0.01% to 5% by weight, calculated in each case as active substance based on the inorganic pigment(s).

**2.** Pigment/auxiliary combination according to Claim 1, **characterized in that** the pigment/auxiliary combination has a chroma difference $\Delta C_{ab}^{*}$, measured in CIELAB-units in accordance with DIN 5033 and DIN 6174, of $\geq 1.5$, in particular $\geq 1.8$ and a relative colour strength of $\geq 95\%$, based on the pigment used, without the auxiliary/ies used, in accordance with the building-material colour test.

**3.** Pigment/auxiliary combination according to one or more of Claims 1 and 2, **characterized in that** the organic auxiliaries are added in an amount of 0.1% to 5% by weight, calculated in each case as active substance based on the inorganic pigment(s).

**4.** Pigment/auxiliary combination according to one or more of Claims 1 to 3, **characterized in that** the pigment/auxiliary combination comprises further auxiliaries which promote processability.

**5.** Pigment/auxiliary combination according to one or more of Claims 1 to 4, **characterized in that** the pigment/auxiliary combination has a residual water content of below 4% by weight, in particular below 2% by weight.

**6.** Pigment/auxiliary combination according to one or more of Claims 1 to 5, **characterized in that** the pigment/auxiliary combination is in the form of bead granules.

**7.** Pigment/auxiliary combination according to Claim 6, **characterized in that** at least 85% of the granulated pigment/auxiliary combination has a particle size of between 60 $\mu$m and 3000 $\mu$m, in particular between 80 $\mu$m and 1500 $\mu$m.

8. Pigment/auxiliary combination according to one or more of Claims 1 to 7, **characterized in that** the pigment/auxiliary combination further comprises preservatives, defoamers, retention agents, rheology modifiers, antisettling agents and/or fragrances.

9. Process for producing a pigment/auxiliary combination according to one or more of Claims 1 to 8, **characterized in that** conventionally prepared inorganic pigments are mixed with at least one organic auxiliary and the mixture is optionally dried and/or ground.

10. Process for producing a pigment/auxiliary combination according to Claim 9, **characterized in that** conventionally prepared inorganic pigments are mixed in suspension or paste with at least one organic auxiliary and the mixture is dried and optionally ground.

11. Process for producing a pigment/auxiliary combination according to Claim 10, **characterized in that** the pigment suspension is a suspension or paste from the pigment preparation operation.

12. Process for producing a pigment/auxiliary combination according to Claim 10, **characterized in that** the pigment suspension is a redispersion of agglomerated particles.

13. Process for producing a pigment/auxiliary combination according to one or more of Claims 9 to 12, **characterized in that** the drying takes place by means of spray drying or fluidized-bed drying.

14. Process for producing a pigment/auxiliary combination according to Claim 9 or 12, **characterized in that** the pigment/auxiliary combination in the dry and optionally ground state is subsequently subjected additionally to a granulation operation.

15. Use of the pigment/auxiliary combination according to one or more of Claims 1 to 8 for colouring lime- and/or cement-bound building materials, such as concrete, cement mortar, render, lime sandstone or else for colouring asphalt.

16. Method of colouring building materials with pigment/auxiliary combination according to Claim 15, **characterized in that** the pigment/auxiliary combination is mixed with the building materials in an amount of 0.1% to 10% by weight, based on cement, or based on the entire mixed material in the case of asphalt.

17. Method of colouring building materials with pigment/auxiliary combination according to one or more of Claims 15 and 16, **characterized in that** the pigment/auxiliary combination is first suspended in water and then mixed with the building materials.

**Revendications**

1. Combinaison pigment-adjuvant sous la forme d'un granulat, contenant un ou plusieurs pigments colorés inorganiques choisis dans le groupe constitué par les pigments d'oxyde de fer ou d'oxyde de chrome, ou des mélanges de ceux-ci, et un ou plusieurs adjuvants organiques, choisis dans le groupe constitué par les polycarboxylates modifiés, les alcools polyvinyliques partiellement ou entièrement hydrolysés, les alkylsulfates sous la forme de leurs sels de métaux alcalins, les alkylsulfonates sous la forme de leurs sels de métaux alcalins, les alkylphosphates sous la forme de leurs sels de métaux alcalins, ou les alkylphosphonates sous la forme de leurs sels de métaux alcalins, ou des mélanges de ceux-ci, la combinaison pigment-adjuvant

   - présentant une couleur $\Delta C_{ab}$*, mesurée en unités CIELAB selon DIN 5033 et DIN 6174, $\geq 1,5$, notamment $\geq$ 1,8, et/ou
   - une intensité de couleur relative $\geq 108$ %, notamment $\geq 110$ %, par rapport au pigment utilisé sans le ou les adjuvants utilisés selon le test de coloration de matériaux de construction,
   et les adjuvants organiques étant ajoutés en une quantité de 0,01 % en poids à 5 % en poids, calculée à chaque fois en tant qu'agent actif par rapport au ou aux pigments inorganiques.

2. Combinaison pigment-adjuvant selon la revendication 1, **caractérisée en ce que** la combinaison pigment-adjuvant présente une couleur $\Delta C_{ab}$*, mesurée en unités CIELAB selon DIN 5033 et DIN 6174, $\geq 1,5$, notamment $\geq 1,8$, et une intensité de couleur relative $\geq 95$ %, par rapport au pigment utilisé sans le ou les adjuvants utilisés selon le test de coloration de matériaux de construction.

3. Combinaison pigment-adjuvant selon une ou plusieurs des revendications 1 à 2, **caractérisée en ce que** les adjuvants organiques sont ajoutés en une quantité de 0,1 % en poids à 5 % en poids, calculée à chaque fois en tant qu'agent actif par rapport au ou aux pigments inorganiques.

4. Combinaison pigment-adjuvant selon une ou plusieurs des revendications 1 à 3, **caractérisée en ce que** la combinaison pigment-adjuvant contient des adjuvants supplémentaires favorisant l'usinabilité.

5. Combinaison pigment-adjuvant selon une ou plusieurs des revendications 1 à 4, **caractérisée en ce que** la combinaison pigment-adjuvant présente une teneur en eau résiduelle de moins de 4 % en poids, notamment de moins de 2 % en poids.

6. Combinaison pigment-adjuvant selon une ou plusieurs des revendications 1 à 5, **caractérisée en ce que** la combinaison pigment-adjuvant se présente sous la forme d'un granulat perlé.

7. Combinaison pigment-adjuvant selon la revendication 6, **caractérisée en ce qu'**au moins 85 % de la combinaison pigment-adjuvant granulée présente une taille de particule comprise entre 60 $\mu$m et 3 000 $\mu$m, notamment entre 80 $\mu$m et 1 500 $\mu$m.

8. Combinaison pigment-adjuvant selon une ou plusieurs des revendications 1 à 7, **caractérisée en ce que** la combinaison pigment-adjuvant contient en outre des conservateurs, des antimousses, des agents de rétention, des modificateurs de rhéologie, des inhibiteurs de dépôt et/ou des parfums.

9. Procédé de fabrication d'une combinaison pigment-adjuvant selon une ou plusieurs des revendications 1 à 8, **caractérisé en ce que** des pigments inorganiques fabriqués d'une manière connue sont mélangés avec au moins un adjuvant organique, et le mélange est éventuellement séché et/ou broyé.

10. Procédé de fabrication d'une combinaison pigment-adjuvant selon la revendication 9, **caractérisé en ce que** des pigments inorganiques fabriqués d'une manière connue sont mélangés en suspension ou en pâte avec au moins un adjuvant organique, séchés et éventuellement broyés.

11. Procédé de fabrication d'une combinaison pigment-adjuvant selon la revendication 10, **caractérisé en ce que** la suspension de pigment est une suspension ou une pâte issue du procédé de fabrication de pigment.

12. Procédé de fabrication d'une combinaison pigment-adjuvant selon la revendication 10, **caractérisé en ce que** la suspension de pigment est une nouvelle dispersion de particules agglomérées.

13. Procédé de fabrication d'une combinaison pigment-adjuvant selon une ou plusieurs des revendications 9 à 12, **caractérisé en ce que** le séchage a lieu par séchage par pulvérisation ou séchage en lit fluidisé.

14. Procédé de fabrication d'une combinaison pigment-adjuvant selon la revendication 9 ou 12, **caractérisé en ce que** la combinaison pigment-adjuvant est ensuite encore soumise à un procédé de granulation à l'état sec et éventuellement broyée.

15. Utilisation de la combinaison pigment-adjuvant selon une ou plusieurs des revendications 1 à 8 pour la coloration de matériaux de construction liés par de la chaux et/ou du ciment, tels que du béton, du mortier de ciment, de l'enduit, du grès calcaire ou également pour la coloration d'asphalte.

16. Procédé de coloration de matériaux de construction avec une combinaison pigment-adjuvant selon la revendication 15, **caractérisé en ce que** la combinaison pigment-adjuvant est mélangée avec les matériaux de construction en une quantité de 0,1 à 10 % en poids, par rapport au ciment ou, dans le cas d'asphalte, par rapport à l'ensemble du produit mélangé.

17. Procédé de coloration de matériaux de construction avec une combinaison pigment-adjuvant selon une ou plusieurs des revendications 15 et 16, **caractérisé en ce que** la combinaison pigment-adjuvant est tout d'abord suspendue dans de l'eau, puis mélangée avec les matériaux de construction.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0199975 A1
- DE 3632913 A1
- EP 0634991 A1
- US 6758893 B2
- EP 0751189 A2
- WO 03066743 A
- US 5853476 A1
- EP 1027302 B1